# FASCICULE DE BREVET EUROPEEN

(11) **EP 1 885 599 B1**
(45) Date de publication et mention de la délivrance du brevet: **22.10.2008**
(21) Numéro de dépôt: 06755525.0
(22) Date de dépôt: 29.05.2006
(51) Int. Cl.: B64D 11/00

(54) **AVION LONG-COURRIER**
LANGSTRECKENFLUGZEUG
LONG-RANGE AIRCRAFT

(30) Priorité: 02.06.2005 FR 0505577
(43) Date de publication de la demande: 13.02.2008
(73) Titulaire: AIRBUS France, 31060 Toulouse Cédex (FR)
(72) Inventeur: GUERING, Bernard, F-31850 Montrabe (FR)
(74) Mandataire: Bonnetat, Christian
(86) Numéro de dépôt international: PCT/FR2006/001205
(87) Numéro de publication internationale: WO 2006/128999

(56) Documents cités:
- EP-A- 0 901 963
- US-A- 5 784 836
- US-A- 5 875 997
- US-B1- 6 520 451
- "A340 CABIN OFFERS NEW LEVELS OF COMFORT FOR PASSENGERS AND CREW" AIRCRAFT ENGINEERING, BUNHILL PUBLICATIONS LTD. LONDON, GB, vol. 63, no. 12, 1 décembre 1991 (1991-12-01), pages 2-4, XP000238199

## Description

La présente invention concerne les avions long-courriers.

On sait que les avions long-courriers peuvent nécessiter deux équipes de pilotage, lorsque les distances qu'ils parcourent sont particulièrement grandes. Il est donc indispensable qu'ils comportent une cabine de repos privée dans laquelle une desdites équipes -qui comprend au moins deux pilotes- peut se reposer, alors que l'autre équipe pilote l'avion. En règle générale, une telle cabine de repos est disposée dans une zone commerciale, par exemple derrière le poste de pilotage ou dans la queue de l'aéronef, ce qui présente l'inconvénient d'obliger les pilotes à passer dans la cabine des passagers pour aller de la cabine de pilotage à la cabine de repos et pour en revenir. De plus, dans une telle disposition, ladite cabine de repos occupe une partie de ladite zone commerciale, de sorte qu'il en résulte la suppression d'un certain nombre de sièges pour passagers, généralement de l'ordre de 6 à 8.

La présente invention a pour objet de remédier à ces inconvénients.

A cette fin, selon l'invention, l'avion long-courrier qui comporte une cabine privée pour les pilotes et dont la cabine de pilotage est disposée sur un plancher au-dessous duquel se trouve une soute, est remarquable en ce que ladite cabine privée est aménagée dans ladite soute et est en communication avec ladite cabine de pilotage à travers au moins une ouverture pratiquée dans ledit plancher.

Ainsi, lesdits pilotes peuvent passer directement de la cabine de pilotage dans la cabine privée, et inversement, sans passer par la cabine des passagers. La présente invention permet donc d'isoler l'ensemble des équipes de pilotage du reste de l'aéronef en regroupant géographiquement la fonction de pilotage et la fonction de repos des pilotes. De plus, la disposition de la cabine privée conforme à l'invention permet un gain de volume et de places en zone commerciale, ce gain étant bien entendu économiquement intéressant pour la compagnie aérienne exploitant l'aéronef.

On remarquera que, dans ladite soute située sous la cabine de pilotage, sont disposés, de façon usuelle, des équipements tels que des batteries, des bouteilles à oxygène, le système anti-givre, des appareils électriques, le système radar, ... de sorte que la présence de ladite cabine de repos peut nécessiter le déplacement ou le réaménagement desdits équipements.

De préférence, afin de simplifier l'installation de ladite cabine privée dans la soute se trouvant sous la cabine de pilotage, ladite cabine privée est constituée par une pluralité d'éléments individuels dont chacun d'eux est susceptible de passer à travers ladite ouverture du plancher et qui sont aptes à être assemblés les uns aux autres à l'intérieur de ladite soute. De façon évidente, de préférence pendant l'assemblage desdits éléments individuels, ladite cabine privée est fixée aux rails longitudinaux et/ou aux cadres transversaux de la partie de structure du fuselage constituant ladite soute. Ladite cabine privée est de plus avantageusement fixée au plancher de la cabine de pilotage. Les moyens de fixation utilisés pour la fixation de la cabine privée à l'intérieur de la soute sont de préférence de types connus permettant certains degrés de liberté, tels que par exemple les moyens de fixation à bielle articulée, à bloc élastique, etc ...

Pour permettre le passage aisé desdits éléments de paroi à travers ladite ouverture du plancher, celle-ci présente une forme oblongue, par exemple au moins approximativement rectangulaire. De plus, pour éviter d'affaiblir le plancher de la cabine de pilotage, ladite ouverture est avantageusement transversale par rapport au fuselage.

Il en résulte qu'il est avantageux que chacun desdits éléments individuels soit relativement plat et ne nécessite qu'une ouverture de dimensions réduites pour son introduction dans ladite soute.

Du fait de l'emplacement de ladite cabine privée au voisinage du nez de l'avion, celle-ci peut présenter, en vue en plan, la forme au moins approximative d'un trapèze convergeant vers l'avant de l'avion.

De façon avantageuse, à sa partie supérieure, ladite cabine privée comporte une excroissance obturant ladite ouverture de plancher et assurant la continuité de celui-ci, ladite excroissance étant pourvue d'au moins une trappe de communication entre ladite cabine de pilotage et ladite cabine privée.

Afin de permettre l'inspection et la maintenance des divers équipements se trouvant dans ladite soute, à l'extérieur de ladite cabine privée, ainsi que de satisfaire aux normes de sécurité (par exemple l'exigence d'un double trajet d'évacuation d'urgence), chacun desdits éléments individuels est pourvu d'au moins une ouverture obturable par un volet.

Ladite cabine privée est avantageusement aménagée pour permettre à deux personnes (les pilotes) de s'asseoir et de s'allonger avec leurs jambes dirigées vers l'avant dudit avion.

Les figures du dessin annexé feront bien comprendre comment l'invention peut être réalisée. Sur ces figures, des références identiques désignent des éléments semblables.

La figure 1 est une vue latérale schématique de l'avant d'un avion long-courrier conforme à la présente invention.

La figure 2 est une vue en plan schématique correspondant à la figure 1.

La figure 3 illustre, en vue éclatée, une cabine privée pour les pilotes conforme à la présente invention.

La figure 4 montre en vue en plan schématique le plancher de la cabine de pilotage de l'avion de long-courrier des figures 1 et 2.

Les figures 5A, 5B et 5C illustrent trois étapes de l'installation de ladite cabine privée dans la soute disposée sous la cabine de pilotage.

La figure 6 montre, en perspective du dessus, la cabine privée de l'invention à l'état monté (à l'extérieur de ladite soute).

La figure 7 illustre, en perspective du dessous, la cabine privée de l'invention à l'état monté (à l'extérieur de ladite soute), la cabine de la figure 7 étant légèrement différente de celle de la figure 6.

Les figures 8 et 9A à 9F illustrent différents aménagements et utilisations de la cabine privée conforme à la présente invention.

Sur les figures schématiques 1 et 2, on a représenté l'avant 1 d'un avion long-courrier. On peut y voir le plancher horizontal longitudinal 2 séparant le fuselage 3 en un espace supérieur 4 et en un espace inférieur 5. Dans l'espace supérieur 4 sont aménagées, à l'aide de cloisons 6, 7, la cabine de pilotage 8, une entrée 9 et la cabine des passagers 10. Dans l'espace inférieur 5 sont aménagées des soutes, dont seule est indiquée la soute 11 disposée sous la cabine de pilotage 8 et séparée de cette dernière par la partie avant 2A du plancher 2 formant le plancher de ladite cabine de pilotage 8.

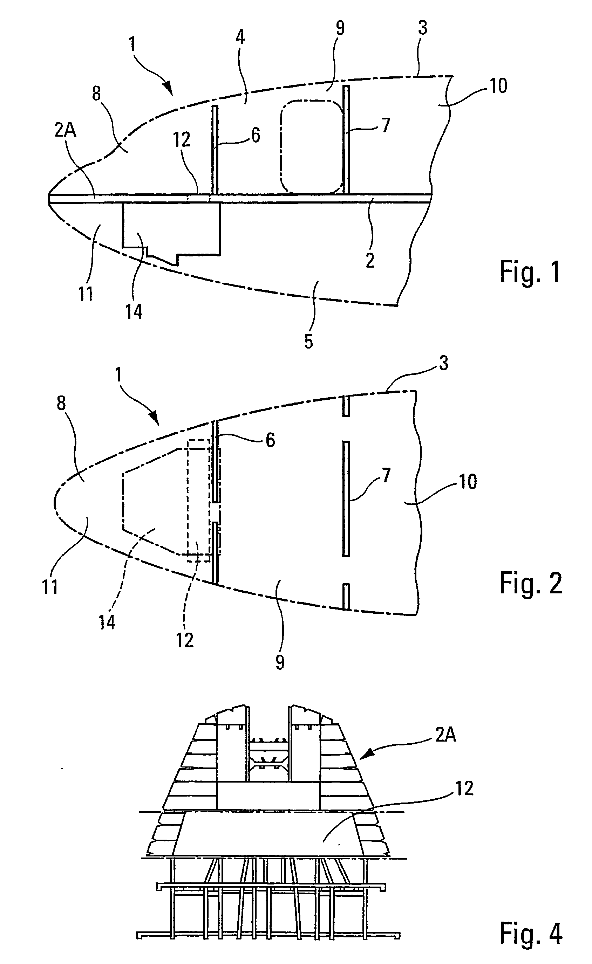

Au voisinage de la cloison 6, séparant la cabine de pilotage 8 de l'entrée 9, le plancher 2A de la cabine de pilotage 8 comporte une ouverture 12 établissant un passage de communication entre la cabine de pilotage 8 et la soute 11 à travers ledit plancher 2A. Comme on peut le voir sur les figures 2 et 4, ladite ouverture 12 est oblongue et transversale par rapport au fuselage 3.

Conformément à la présente invention, l'avion long-courrier conforme à la présente invention comporte une cabine privée 14, aménagée dans la soute 11 et en communication avec la cabine de pilotage 8 à travers ladite ouverture 12 pratiquée dans le plancher 2A.

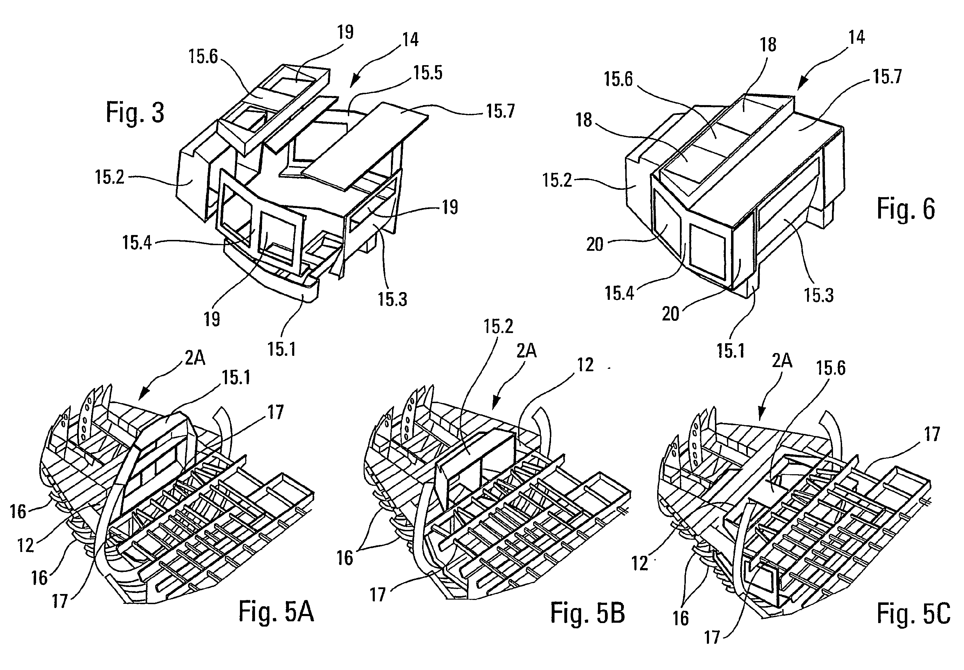

Comme l'illustre la figure 3, ladite cabine privée 14 est constituée par une pluralité d'éléments individuels 15 comprenant, entre autres, un élément de fond 15.1, un élément avant 15.2, un élément arrière 15.3, des éléments latéraux 15.4 et 15.5 et des éléments de plafond 15.6 et 15.7. Tous lesdits éléments individuels 15 sont aptes à passer à travers l'ouverture 12 du plancher 2A et à être assemblés les uns aux autres à l'intérieur de la soute 11 pour former ladite cabine 14. Ces éléments individuels 15 présentent de préférence une ou plusieurs faces planes.

Sur les figures 5A, 5B et 5C, on a représenté respectivement à titre d'exemples, l'introduction de l'élément de fond 15.1, de l'élément avant 15.2 et de l'élément de plafond 15.6 dans la soute 11 à travers l'ouverture 12.

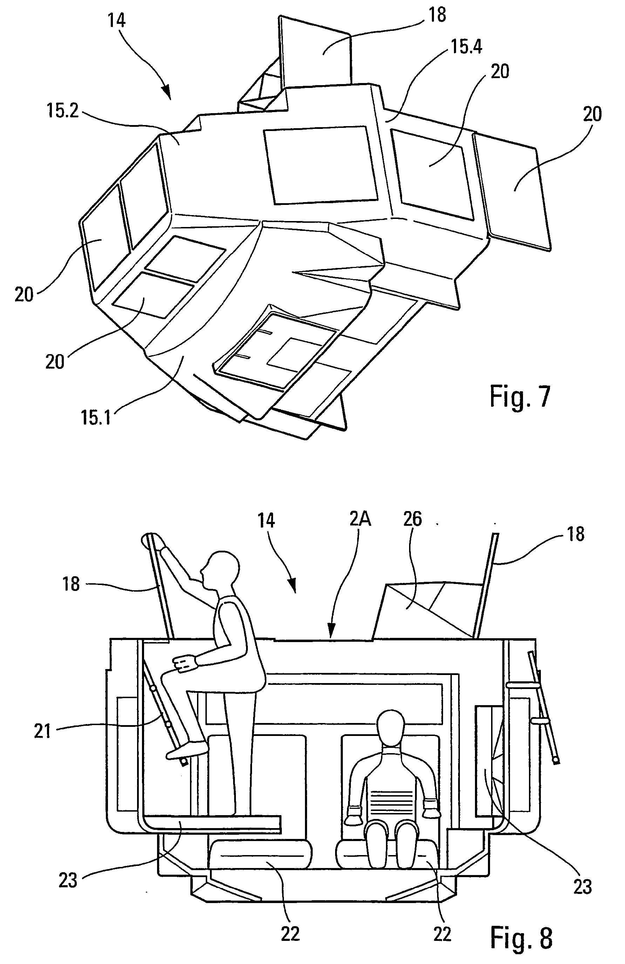

Après assemblage desdits éléments 15 à l'intérieur de la soute 11, la cabine privée 14 se présente sous la forme illustrée par la figure 6 ou par la figure 7. De plus, au moins certains desdits éléments 15 sont fixés, de toute façon connue non représentée, à des cadres 16 et à des longerons 17 du fuselage 3, et/ou au plancher 2A, pour immobiliser la cabine privée 14 à l'intérieur de la soute 11.

Une fois assemblée, la cabine privée 14 présente, en vue en plan, la forme au moins approximative d'un trapèze convergeant vers l'avant de l'avion, ce qui lui permet d'occuper au mieux le volume de la soute 11.

Comme on peut le voir sur les figures 5C et 6, l'élément de plafond 15.6 forme une excroissance pour la cabine 14, ladite excroissance obturant l'ouverture 12 du plancher 2A et assurant la continuité de celui-ci à l'intérieur de la cabine de pilotage 8. De plus, l'élément de plafond 15.6 comporte deux trappes de communication 18 (donc logées dans l'ouverture 12), permettant la communication entre la cabine de pilotage 8 et la cabine privée 14.

La figure 8 illustre schématiquement le passage d'un pilote de la cabine privée 14 à la cabine de pilotage 8 à travers une trappe de communication 18, à l'aide d'une échelle 21. Bien entendu, le passage en sens inverse s'effectue de façon semblable.

Chaque élément individuel 15 est par ailleurs pourvu d'au moins une ouverture 19 obturable par un volet 20, permettant la communication entre ladite cabine privée 14 et la soute 11.

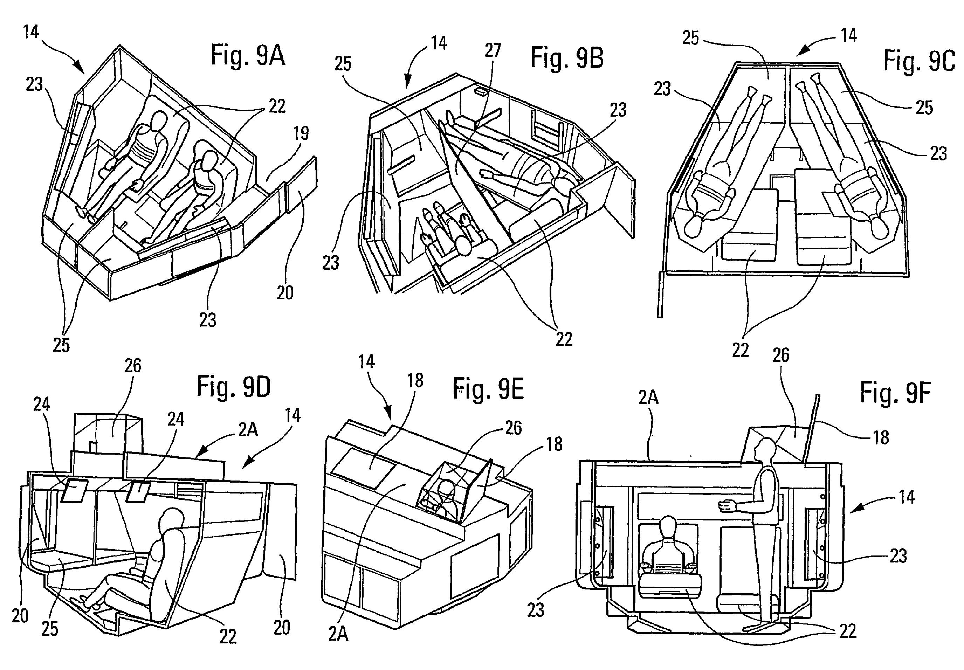

Dans les représentations des figures 8 et 9A à 9F, la cabine 14 est aménagée pour recevoir confortablement deux personnes (notamment un pilote et un copilote). A cet effet, l'aménagement de la cabine 14 peut comporter principalement deux fauteuils 22 disposés l'un à côté de l'autre et regardant vers l'avant de l'avion long-courrier, ainsi que deux banquettes escamotables 23 pouvant servir de lit. Ainsi, un tel aménagement permet à deux personnes de s'asseoir et/ou de s'allonger côte à côte, avec leurs jambes dirigées vers l'avant de l'avion.

Bien entendu, la cabine privée 14 peut comporter de nombreux autres aménagements de confort, tels que écrans vidéo 24, tablettes 25, coiffe pliable 26 associée aux trappes 18 de l'élément de plafond 15.6 pour permettre d'augmenter la hauteur dans la cabine 14 à l'aplomb des trappes 18, cloison amovible 27, etc ... Les figures 8 et 9A à 9F illustrent quelques-uns de ces aménagements et des positions différentes que peuvent prendre les pilotes à l'intérieur de la cabine privée 14.

## Revendications

1. Avion long-courrier qui comporte une cabine privée pour les pilotes et dont la cabine de pilotage (8) est disposée sur un plancher (2A) au-dessous duquel se trouve une soute (11),
**caractérisé en ce que** ladite cabine privée (14) est aménagée dans ladite soute (11) et est en communication avec ladite cabine de pilotage (8) à travers au moins une ouverture (12) pratiquée dans ledit plancher (2A).

2. Avion long-courrier selon la revendication 1,
**caractérisé en ce que** ladite cabine privée est constituée par une pluralité d'éléments individuels (15) dont chacun d'eux est susceptible de passer à travers ladite ouverture (12) du plancher (2A) et qui sont aptes à être assemblés les uns aux autres à l'intérieur de ladite soute (11).

3. Avion long-courrier selon l'une des revendications 1 ou 2,
**caractérisé en ce que** ladite ouverture (12) du plancher (2A) présente une forme oblongue.

4. Avion long-courrier selon la revendication 3,
**caractérisé en ce que** ladite ouverture (12) du plancher (2A) est transversale par rapport au fuselage (3).

5. Avion long-courrier selon l'une des revendications 2 à 4,
**caractérisé en ce que** chacun desdits éléments individuels (15) comporte une ou plusieurs faces planes.

6. Avion long-courrier selon l'une des revendications 1 à 5,
**caractérisé en ce que** ladite cabine privée (14) présente, en vue en plan, la forme au moins approximative d'un trapèze convergeant vers l'avant dudit avion.

7. Avion long-courrier selon l'une des revendications 1 à 6,
**caractérisé en ce que** ladite cabine privée (14) comporte, à sa partie supérieure, une excroissance (15.6) obturant ladite ouverture (12) du plancher (2A) et assurant la continuité de celui-ci, ladite excroissance étant pourvue d'au moins une trappe de communication (18) entre ladite cabine de pilotage (8) et ladite cabine privée (14).

8. Avion long-courrier selon l'une des revendications 2 à 7,
**caractérisé en ce que** chacun desdits éléments individuels (15) est pourvu d'au moins une ouverture (19) obturable par un volet (20).

9. Avion long-courrier selon l'une des revendications 1 à 8,
**caractérisé en ce que** ladite cabine privée (14) est aménagée pour permettre à deux personnes de s'asseoir et de s'allonger côte à côte avec leurs jambes dirigées vers l'avant dudit avion.

## Claims

1. A long-haul airplane that comprises a private cabin for the pilots and whose flight deck (8) is disposed on a floor (2A) below which there is a storage compartment (11),
**characterized in that** said private cabin (14) is arranged in said storage compartment (11) and is in communication with said flight deck (8) through at least one opening (12) made in said floor (2A).

2. The long-haul airplane as claimed in claim 1,
**characterized in that** said private cabin consists of a plurality of individual elements (15) each of which is capable of passing through said opening (12) in the floor (2A) and which are capable of being assembled to one another inside said storage compartment (11).

3. The long-haul airplane as claimed in claim 1 or 2,
**characterized in that** said opening (12) in the floor (2A) has an oblong shape.

4. The long-haul airplane as claimed in claim 3,
**characterized in that** said opening (12) in the floor (2A) is transversal relative to the fuselage (3).

5. The long-haul airplane as claimed in one of claims 2 to 4,
**characterized in that** each of said individual elements (15) comprises one or more flat faces.

6. The long-haul airplane as claimed in one of claims 1 to 5,
**characterized in that** said private cabin (14) has, in plan view, at least the approximate shape of a trapezium converging toward the front of said airplane.

7. The long-haul airplane as claimed in one of claims 1 to 6,
**characterized in that** said private cabin (14) comprises, on its top portion, a protrusion (15.6) blanking off said opening (12) in the floor (2A) and forming the continuation of the latter, said protrusion being provided with at least one communication hatch (18) between said flight deck (8) and said private cabin (14).

8. The long-haul airplane as claimed in one of claims 2 to 7,
**characterized in that** each of said individual elements (15) is provided with at least one opening (19) that can be blanked off by a shutter (20).

9. The long-haul airplane as claimed in one of claims 1 to 8,
**characterized in that** said private cabin (14) is arranged to allow two people to sit down and lie down side by side with their legs pointing toward the front of said airplane.

## Patentansprüche

1. Langstreckenflugzeug, das eine Ruhekabine für die Piloten umfasst und dessen Pilotenraum (8) auf einem Boden (2A) angeordnet ist, unter dem sich ein Laderaum (11) befindet,
**dadurch gekennzeichnet, dass** die Ruhekabine (14) in dem Laderaum (11) eingerichtet ist und mit dem Pilotenraum (8) über mindestens eine in dem Boden (2A) gebildete Öffnung (12) in Verbindung steht.

2. Langstreckenflugzeug nach Anspruch 1,
**dadurch gekennzeichnet, dass** die Ruhekabine durch eine Vielzahl von Einzelelementen (15) gebildet wird, die jeweils durch die Öffnung (12) des Bodens (2A) durchgeführt werden können und die im Inneren des Laderaums (11) miteinander verbindbar sind.

3. Langstreckenflugzeug nach Anspruch 1 oder 2,
**dadurch gekennzeichnet, dass** die Öffnung (12) des Bodens (2A) eine längliche Form aufweist.

4. Langstreckenflugzeug nach Anspruch 3,
**dadurch gekennzeichnet, dass** die Öffnung (12) des Bodens (2A) quer zum Rumpf (3) angeordnet ist.

5. Langstreckenflugzeug nach einem der Ansprüche 2 bis 4,
**dadurch gekennzeichnet, dass** jedes der Einzelelemente (15) eine oder mehrere Flachseiten aufweist.

6. Langstreckenflugzeug nach einem der Ansprüche 1 bis 5,
**dadurch gekennzeichnet, dass** die Ruhekabine (14) in der Draufsicht zumindest annähernd die Form eines Trapezes aufweist, das zur Vorderseite des Flugzeugs hin zusammenläuft.

7. Langstreckenflugzeug nach einem der Ansprüche 1 bis 6,
**dadurch gekennzeichnet, dass** die Ruhekabine (14) an ihrem oberen Teil einen Vorsprung (15.6) umfasst, der die Öffnung (12) des Bodens (2A) verschließt und sicherstellt, dass dieser durchgehend bleibt, wobei der Vorsprung mit mindestens einer Verbindungsluke (18) zwischen dem Pilotenraum (8) und der Ruhekabine (14) ausgestattet ist.

8. Langstreckenflugzeug nach einem der Ansprüche 2 bis 7,
**dadurch gekennzeichnet, dass** jedes der Einzelelemente (15) mit mindestens einer durch eine Klappe (20) verschließbaren Öffnung (19) ausgestattet ist.

9. Langstreckenflugzeug nach einem der Ansprüche 1 bis 8,
**dadurch gekennzeichnet, dass** die Ruhekabine (14) dazu eingerichtet ist, dass zwei Personen mit zur Vorderseite des Flugzeugs gerichteten Beinen nebeneinander sitzen oder liegen können.
